# EUROPEAN PATENT SPECIFICATION

(11) **EP 4 094 629 B1**
(45) Date of publication and mention of the grant of the patent: **15.11.2023**
(21) Application number: 21217037.7
(22) Date of filing: 22.12.2021
(51) Int. Cl.: A47C 3/30, A47C 3/32, A47C 7/00

(54) **ELECTRICALLY CONTROLLED CHASSIS AND CHAIR**
ELEKTRISCH GESTEUERTES FAHRGESTELL UND STUHL
CHÂSSIS ET FAUTEUIL À COMMANDE ÉLECTRIQUE

(30) Priority: 27.05.2021 CN 202110583062
(43) Date of publication of application: 30.11.2022
(73) Proprietor: Comfort Office Furniture Co., Ltd Guangdong, Nansha District Guangzhou City Guangdong 510000 (CN)
(72) Inventor: HU, Guoqiang, Guangzhou City, Guangdong 510000 (CN); ZHANG, Min, Guangzhou City, Guangdong 510000 (CN)
(74) Representative: Ipside

(56) References cited:
- EP-B1- 3 672 451
- US-A- 5 397 111
- US-A1- 2016 327 071

## Description

### Technical Field

Embodiments of the present disclosure relate to the technical field of chair adjustment and control devices, and in particular, relate to an electrically controlled chassis and a chair.

### Background of the Invention

In a conventional chair, lift adjustment of a chassis of the chair and pitch adjustment of a backrest of the chair are mechanically and manually achieved. Therefore, the chassis of the chair has a complicated internal control structure, and is thus difficult to operate. Documents which are considered as useful for understanding the invention are US201 6/327071 A1 and EP3672 451B1.

### Summary of the Invention

The invention is defined in claim 1.

In view of the above problem, embodiments of the present disclosure provide an electrically controlled chassis and a chair, such that an adjustment mechanism for lift adjustment of the chassis of the chair and pitch adjustment of a backrest of the chair is simplified, and operation convenience is improved.

According to one aspect of the embodiments of the present disclosure, an electrically controlled chassis is provided. The electrically controlled chassis is applicable to adjustment of a chair. The electrically controlled chassis includes: a chassis body; an electrical control box, disposed on the chassis body, and internally provided with an accommodation space; a drive motor, disposed in the accommodation space of the electrical control box, and configured to control lift adjustment of the chassis of the chair and pitch adjustment of a backrest of the chair; a winding mechanism, connected to an output shaft of the drive motor, and being rotatable with the output shaft of the drive motor; a first pull cord, reversely wound on the winding mechanism, and one end of the first pull cord being fixedly connected to the winding mechanism; a second pull cord, normally wound on the winding mechanism, and one end of the second pull cord being fixedly connected to the winding mechanism; a backrest adjustment mechanism, disposed on the chassis body, and fixedly connected to the other end of the first pull cord, wherein in the case that the output shaft of the drive motor drives the winding mechanism to rotate along a first direction, the first pull cord is pulled such that the backrest adjustment mechanism is adjustable; and a chassis lift mechanism, disposed on the chassis body, and fixedly connected to the other end of the second pull cord, wherein in the case that the output shaft of the drive motor drives the winding mechanism to rotate along a second direction, the second pull cord is pulled such that the chassis lift mechanism is adjustable.

In an optionally embodiment, the electrically controlled chassis further includes a wireless signal receiver device, wherein the wireless signal receiver device is disposed in the accommodation space of the electrical control box and electrically connected to the drive motor, and configured to receive a wireless control signal to control operation of the drive motor.

In an optional embodiment, the winding mechanism is provided with a rotation shaft, a baffle being sleeved onto the rotation shaft, the baffle being provided with an opening; wherein a throughbeam photoelectric sensor corresponding to a position of the baffle is disposed in the accommodation space of the electrical control box, the throughbeam photoelectric sensor operates via the opening, and configured to output a control signal to the drive motor.

In an optional embodiment, the chassis lift mechanism includes a pneumatic rod and a rotation stopper, one end of the pneumatic rod being provided with a key valve, and one end of the rotation stopper being rotatably connected to the chassis body, and the other end of the rotation stopper being connected to the second pull cord; wherein in the case that the drive motor drives the second pull cord to move, the second pull cord pulls the rotation stopper to rotate, such that rotation stopper presses the key valve to cause the pneumatic rod to move upward and downward.

In an optional embodiment, the chassis lift mechanism further includes an urging direction adjuster; wherein the urging direction adjuster is disposed at a position, corresponding to the rotation stopper, on the chassis body, and the second pull cord penetrates the urging direction adjuster; and the urging direction adjuster is configured to adjust a movement direction of the second pull cord to be consistent with a tangential direction of a rotation direction of the rotation stopper.

In an optional embodiment, the urging direction adjuster is provided with a catch groove and a wheel, the wheel being disposed opposite to the rotation stopper; wherein the second pull cord is clamped into the catch groove, and wound on the wheel.

In an optional embodiment, the chassis body includes a holder and a backrest support rotatably connected to the holder, and the backrest adjustment mechanism includes a catch block, a locking slider, and a first elastic member; wherein the catch block is disposed on the backrest support; one end of the first elastic member is connected to the holder, and the other end of the first elastic member is connected to the locking slider, and configured to supply an elastic force for sliding towards the catch block to the locking slider; and the locking slider is in limiting fit with the catch block, and configured to limit and adjust the backrest support.

In an optional embodiment, the backrest adjustment mechanism further includes an elastic slider and a second elastic member; wherein the elastic slider is slidably disposed on the holder; one side of the locking slider is provided with a first rack, one end of the elastic slider is provided with a second rack, and the elastic slider locks and limits the locking slider under meshing between the second rack on the elastic slider and the first rack on the locking slider; and one end of the second elastic member is disposed on the holder, and the other end of the second elastic member is connected to the elastic slider, and configured to drive the elastic slider to detach from the locking slider.

In an optional embodiment, the backrest adjustment mechanism further includes an active slider and a third elastic member; wherein the active slider is slidably disposed on the holder and provided with a first slant edge, and the elastic slider is provided with a second slant edge; one end of the active slider is connected to one end of the third elastic member, and the other end of the active slider is connected to the first pull cord; the other end of the third elastic member is connected to the holder, and configured to supply an elastic force for sliding towards the elastic slider to the active slider; and in the case that the first pull cord pulls the active slider to slide, the first slant edge of the active slider detaches from the second slant edge of the elastic slider, and the elastic slider slides towards the active slider under action of the second elastic member, such that the second rack on the elastic slider detaches from the first rack on the locking slider.

In an optional embodiment, the chassis body is provided with a manually controlled handle, wherein the manually controlled handle is connected to the backrest adjustment mechanism and the chassis lift mechanism by a third pull cord and a fourth pull cord, and configured to control the backrest adjustment mechanism and the chassis lift mechanism.

In an optional embodiment, the output shaft of the drive motor is rotatably connected to the winding mechanism via the transmission mechanism.

In an optional embodiment, the transmission mechanism includes one or a plurality of a worm, a turbine, a gear, and a bevel gear, to retard or accelerate the drive motor, and change the direction of a transmission shaft.

In an optional embodiment, the electrical control box is provided with a battery accommodation structure configured to accommodate a battery.

According to another aspect of the embodiments of the present disclosure, a chair is provided. The chair includes the electrically controlled chassis.

In an optional embodiment, the chair includes a handle fixed to the electrically controlled chassis, wherein the handle is internally provided with a wireless signal transmitter device, a switch electrically connected to the wireless signal transmitter device being disposed on an outer wall of the handle.

According to the embodiments of the present disclosure, the electrically controlled chassis is provided with only one drive motor, the first pull cord and the second pull cord are reversely wound on the winding mechanism, forward rotation and reverse rotation of the output shaft of the drive motor respectively drive the winding mechanism to rotate along the first direction or the second direction, such that the first pull cord is only pulled or the second pull cord is only pulled. In this way, the backrest adjustment mechanism is adjusted or the chassis lift mechanism is adjusted. This simplifies the structure for electrically controlling the chassis of the chair, saves space, and effectively reduces production cost. In addition, the electrical control structure is simple and easy to operate.

The above description only summarizes the technical solutions of the present disclosure. Specific embodiments of the present disclosure are described hereinafter to better and clearer understand the technical solutions of the present disclosure, to practice the technical solutions based on the disclosure of the specification and to make the above and other objectives, features and advantages of the present disclosure more apparent and understandable.

### Brief description of the Drawings

By reading the detailed description of preferred embodiments hereinafter, various other advantages and beneficial effects become clear and apparent for persons of ordinary skill in the art. The accompanying drawings are merely for illustrating the preferred embodiments, but shall not be construed as limiting the present disclosure. In all the accompanying drawings, like reference numerals denote like parts. In the drawings:
FIG. 1 is a schematic structural view of an electrically controlled chassis according to an embodiment of the present disclosure;
FIG. 2 is a schematic exploded structural view of an electrical control box in the electrically controlled chassis according to an embodiment of the present disclosure;
FIG. 3 is a schematic structural view of a baffle and a throughbeam photoelectric sensor in the electrically controlled chassis according to an embodiment of the present disclosure;
FIG. 4 is a schematic exploded structural view from a view angle of the electrically controlled chassis according to an embodiment of the present disclosure;
FIG. 5 is a schematic partial enlarged view of part A in FIG. 4;
FIG. 6 is a schematic sectional view of fitting between a pneumatic rod and a rotation stopper in the electrically controlled chassis according to an embodiment of the present disclosure;
FIG. 7 is a schematic structural view of fitting between an urging direction adjuster and the rotation stopper in the electrically controlled chassis according to an embodiment of the present disclosure;
FIG. 8 is a schematic exploded structural view from another view angle of the electrically controlled chassis according to an embodiment of the present disclosure;
FIG. 9 is a schematic partial enlarged view of part B in FIG. 8; and

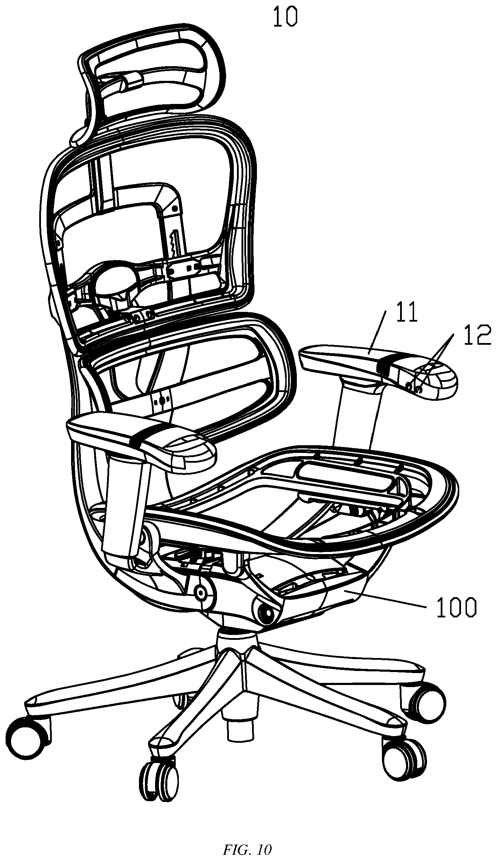

FIG. 10 is a schematic structural view of a chair according to an embodiment of the present disclosure.

Reference numerals in the embodiments and denotations thereof:
100-electrically controlled chassis, 110-chassis body, 111-holder, 112-backrest support, 113-manually controlled handle, 120-electrical control box, 130-drive motor, 131- output shaft, 140-winding mechanism, 141-rotation shaft, 142-baffle, 1421-opening, 143-throughbeam photoelectric sensor, 150-first pull cord, 160-second pull cord, 170-wireless signal receiver device, 181-pneumatic rod, 182-key valve, 183-rotation stopper, 1831-hinge end, 1832-force receiving end, 184-urging direction adjuster, 1841-catch groove, 1842-wheel, 191-catch block, 192-locking slider, 1921-first elastic member, 1922-first rack, 193-elastic slider, 1931-second rack, 1932-second inclined edge, 194-second elastic member, 195-active slider, 1951-first inclined edge, 196-third elastic member, 200-transmission mechanism, 210-third pull cord, 220-fourth pull cord, 300-battery, 400-battery accommodation structure, 10-chair, 11-handle, and 12-switch.

### Detailed Description of Embodiments

The embodiments containing the technical solutions of the present disclosure are described in detail with reference to the accompanying drawings. The embodiments hereinafter are only used to clearly describe the technical solutions of the present disclosure. Therefore, these embodiments are only used as examples, but are not intended to limit the protection scope of the present disclosure.

According to one aspect of the embodiments of the present disclosure, an electrically controlled chassis is provided. The electrically controlled chassis is applicable to adjustment of a chair to simplify an adjustment mechanism for lift adjustment of the chassis of the chair and pitch adjustment of a backrest of the chair, and improve operation convenience.

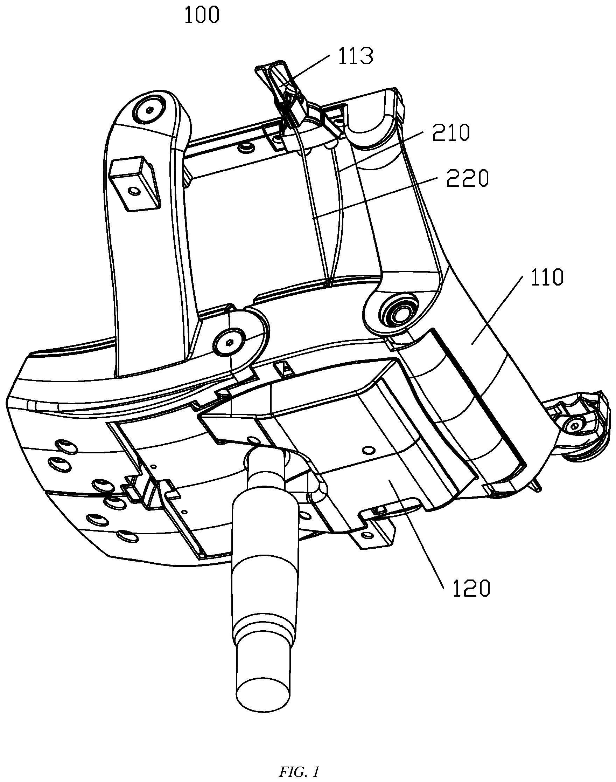

Referring to FIG. 1 to FIG. 2, a structure of an electrically controlled chassis and an exploded structure of an electrical control box in the electrically controlled chassis according to some embodiments of the present disclosure are illustrated.

As illustrated in the drawings, the electrically controlled chassis 100 includes: a chassis body 110, an electric control box 120, a drive motor 130, a winding structure 140, a first pull cord 150, a second pull cord 160, a backrest adjustment mechanism, and a chassis lift mechanism. The electrical control box 120 is disposed on the chassis body 110, and internally provided with an accommodation space. The drive motor 130 is disposed in the accommodation space of the electrical control box 120, and configured to control lift adjustment of the chassis of the chair and pitch adjustment of a backrest of the chair. The winding mechanism 140 is connected to an output shaft 131 of the drive motor 130, and rotatable with the output shaft 131 of the drive motor 130. The first pull cord 150 is reversely wound on the winding mechanism 140, and one end of the first pull cord 150 is fixedly connected to the winding mechanism 140. The second pull cord 160 is normally wound on the winding mechanism 140, and one end of the second pull cord 160 is fixedly connected to the winding mechanism 140. The backrest adjustment mechanism is disposed on the chassis body 110, and fixedly connected to the other end of the first pull cord 150, wherein in the case that the output shaft 131 of the drive motor 130 drives the winding mechanism 140 to rotate along a first direction, the first pull cord 150 is pulled such that the backrest adjustment mechanism is pitch adjustable. The chassis lift mechanism is disposed on the chassis body 110, and connected to the other end of the second pull cord 160, wherein in the case that the output shaft 131 of the drive motor 130 drives the winding mechanism 140 to rotate along a second direction, the second pull cord 160 is pulled such that the chassis lift mechanism is lift adjustable.

According to the embodiments of the present disclosure, the electrically controlled chassis 100 is provided with only one drive motor 130, the first pull cord 150 and the second pull cord 160 are reversely wound on the winding mechanism 140, forward rotation and reverse rotation of the output shaft 131 of the drive motor 130 respectively drive the winding mechanism 140 to rotate along the first direction or the second direction, such that the first pull cord 150 is only pulled or the second pull cord 160 is only pulled. In this way, the backrest adjustment mechanism is adjusted or the chassis lift mechanism is adjusted. This simplifies the structure for electrically controlling the chassis of the chair, saves space, and effectively reduces production cost. In addition, the electrical control structure is simple and easy to operate.

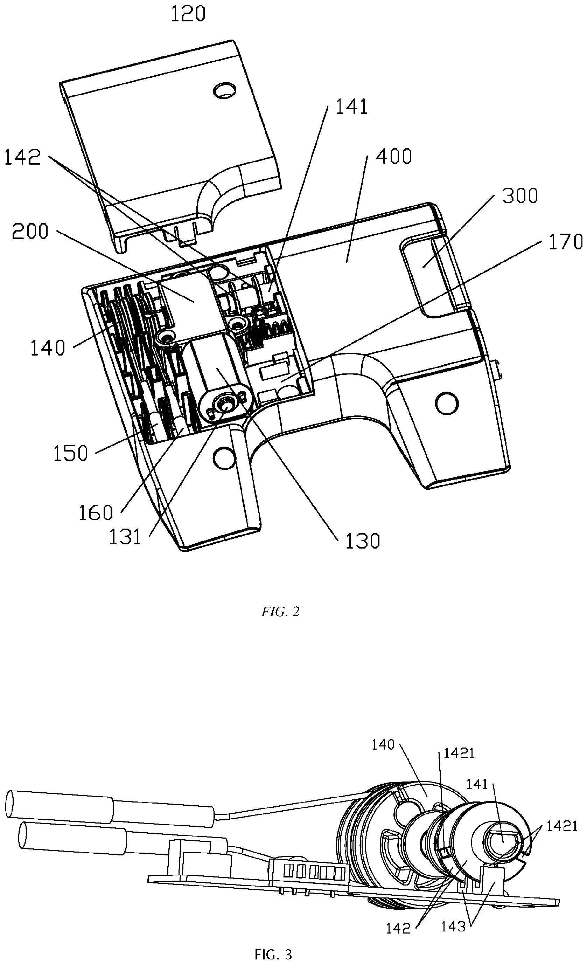

Still referring to FIG. 2, in the specific embodiment as illustrated in FIG. 2, the output shaft 131 of the drive motor 130 may be rotatably connected to the winding mechanism 140 via the transmission mechanism 200. The transmission mechanism 200 may be, for example, any combination of a worm, a turbine, a gear, and a bevel gear, to retard or accelerate the drive motor 130, and change the direction of a transmission shaft. To ensure normal operation of the drive motor 130, the electrical control box 120 may be provided with a battery accommodation structure 400 configured to accommodate a battery 300.

A person skilled in the art shall understand that the illustrations in the drawings are merely exemplary, and in other embodiments, the winding mechanism 140 may also be directly sleeved onto the output shaft 131 of the drive motor 130, and rotation of the output shaft 131 of the drive motor 130 directly drives the winding mechanism 140 to rotate.

Still referring to FIG. 2, in some embodiments, the electrically controlled chassis 100 may further include a wireless signal receiver device 170. The wireless signal receiver device 170 is disposed in the accommodation space of the electrical control box 120 and electrically connected to the drive motor 130, and is configured to receive a wireless control signal to control operation of the drive motor 130.

By configuring the wireless signal receiver device 170, the backrest adjustment mechanism and the chassis lift mechanism may be remotely controlled. For example, the chair may be adjusted by remotely controlling a terminal to send the wireless control signal. In addition, configuration of the wireless signal receiver device 170 also enables a control switch on the electrically controlled chassis 100 or the chair to control the drive motor 130 in the electrical control box 120 based on a wireless signal, such that electrically connected conductive wires inside the electrically controlled chassis 100 are not needed and the structure of the electrically controlled chassis 100 is further simplified. This saves a hollow wiring space inside the chassis, and effectively improves stability of the structure of the electrically controlled chassis 100.

Still referring to FIG. 2, in the specific embodiment as illustrated in FIG. 2, the wireless signal receiver device 170 may be disposed on a circuit board to implement the function of receiving the wireless signal.

Referring to FIG. 2 and FIG. 3, in some embodiments, the winding mechanism 140 is provided with a rotation shaft 141. A baffle 142 is sleeved onto the rotation shaft 141. The baffle 142 is provided with an opening 1421. A throughbeam photoelectric sensor 143 corresponding to the position of the baffle 142 is disposed in the accommodation space of the electrical control box 120. The throughbeam photoelectric sensor 143 operates via the opening 1421 and outputs a control signal to the drive motor 130.

By configuring the baffle 142 and the throughbeam photoelectric sensor 143, a rotation stroke of the drive motor 130 is controlled, such that a case where the pull cords are broken due to an over-great rotation stroke of the output shaft 131 of the drive motor 130 is prevented.

Still referring to FIG. 3, in the specific embodiment as illustrated in FIG. 3, two baffles 142 and two throughbeam photoelectric sensors 143 are configured in two sets. One set is configured to control a forward rotation stroke of the rotation shaft 141, and the other set is configured to control a reverse rotation stroke of the rotation shaft 141.

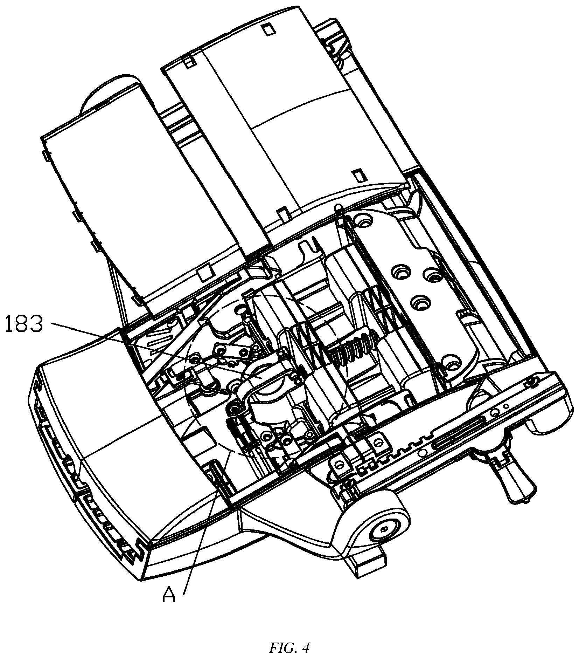

Referring to FIG. 4 to FIG. 6, a structure of the chassis lift mechanism in the electrically controlled chassis 100 according to an embodiment of the present disclosure is schematically illustrated. In some embodiments, the chassis lift mechanism includes a pneumatic rod 181 and a rotation stopper 183. One end of the pneumatic rod 181 is provided with a key valve 182. One end of the rotation stopper 183 is connected to the chassis body, and the other end of the rotation stopper 183 is connected to the second pull cord 160. In the case that the drive motor drives the second pull cord 160 to rotate, the second pull cord 160 drives the rotation stopper 183 to rotate, such that the rotation stopper 183 presses the key valve 183, causing the pneumatic rod 181 to move upward and downward.

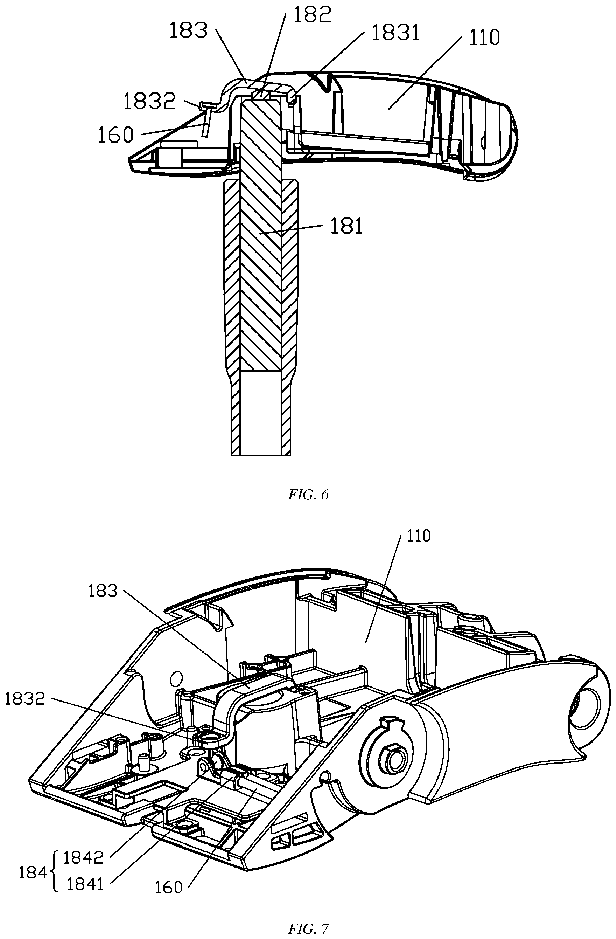

Still referring to FIG. 6, in the specific embodiment as illustrated in FIG. 6, the rotation stopper 183 is provided with a hinge end 1831 rotatably connected to the chassis body 110, and a force receiving end 1832 fixedly connected to the second pull cord 160. During use, in the case that the drive motor 130 operates and reversely rotates, the second pull cord 160 is pulled, the force receiving end 1832 is driven to move, and the rotation stopper 183 rotates counterclockwise relative to the chassis body 110 through the hinge end 1831, such that the rotation stopper 183 presses the key valve 182; and in the case that the chassis body 110 does not suffer from any external force or suffers from an external force less than a force for the pneumatic rod 181 to automatically lift and restore, the pneumatic rod 181 automatically lifts and restores, and jacks the chassis body 110, thereby implementing lift adjustment of the chair. In the case that the drive motor 130 operates and reversely rotates, the second pull cord 160 is pulled, the force receiving end 1832 is driven to move, and the rotation stopper 183 rotates counterclockwise relative to the chassis body 110 through the hinge end 1831, such that the rotation stopper 183 presses the key valve 182. In this case, when a human body is seated on the chair, and a downward gravity of the human body is greater than the force for the pneumatic rod 181 to automatically lift and restore, the pneumatic rod 181 is pressed and slides, thereby implementing fall adjustment of the chair.

Referring to FIG. 7, a structure of an urging direction adjuster in the electrically controlled chassis according to an embodiment of the present disclosure is schematically illustrated. In some embodiments, the chassis lift mechanism further includes an urging direction adjuster 184. The urging direction adjuster 184 is disposed at a position, corresponding to the rotation stopper 183, on the chassis body 110; the second pull cord 160 penetrates the urging direction adjuster 184; and the urging direction adjuster 184 is configured to adjust a movement direction of the second pull cord 160 to be consistent with a tangential direction of a rotation direction of the rotation stopper 183.

By configuring the urging direction adjuster 184, a direction of a pull force applied by the second pull cord 160 on the rotation stopper 183 is constantly tangential to a circle of rotation trajectory of the rotation stopper 183, such that an effective pull force applied by the second pull cord 160 on the rotation stopper 183 is the maximum. In this way, the rotation stopper 183 may be more conveniently pulled.

Still referring to FIG. 7, in some embodiments, the urging direction adjuster 184 is provided with a catch groove 1841 and a wheel 1842. The wheel 1842 is disposed opposite to the rotation stopper 183. The second pull cord 160 is clamped into the catch groove 1841, and wound on the wheel 1842.

Still referring to FIG. 7, in the specific embodiment as illustrated in FIG. 7, the wheel 1842 is disposed at an orthographic projection of the force receiving end 1832 on the chassis body, and the second pull cord 160 is clamped into the catch groove 1841 and wound on the wheel 1842. In the case that the drive motor rotates, the second pull cord 160 is driven to move along a direction parallel to the chassis body 110. In the case that the second pull cord 160 travels through the urging direction adjuster 184, the movement direction of the second pull cord 160 is adjusted to a direction tangential to the circle of rotation trajectory of the force receiving end 1832, such that the second pull cord 160 pulls the force receiving end 1832 to move.

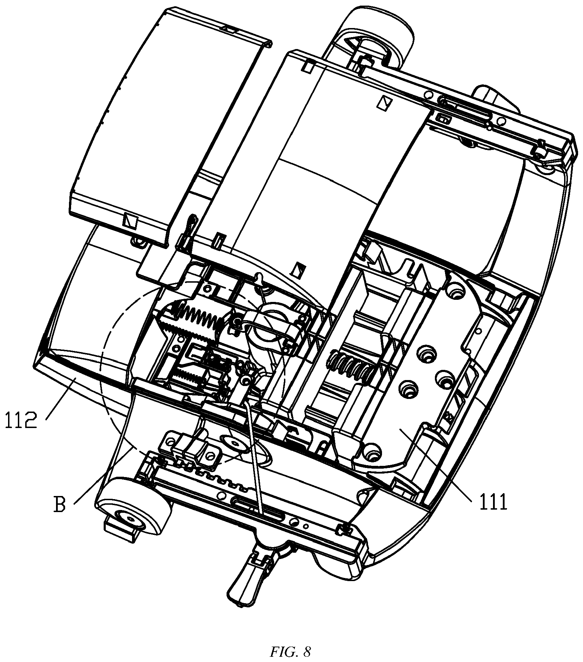

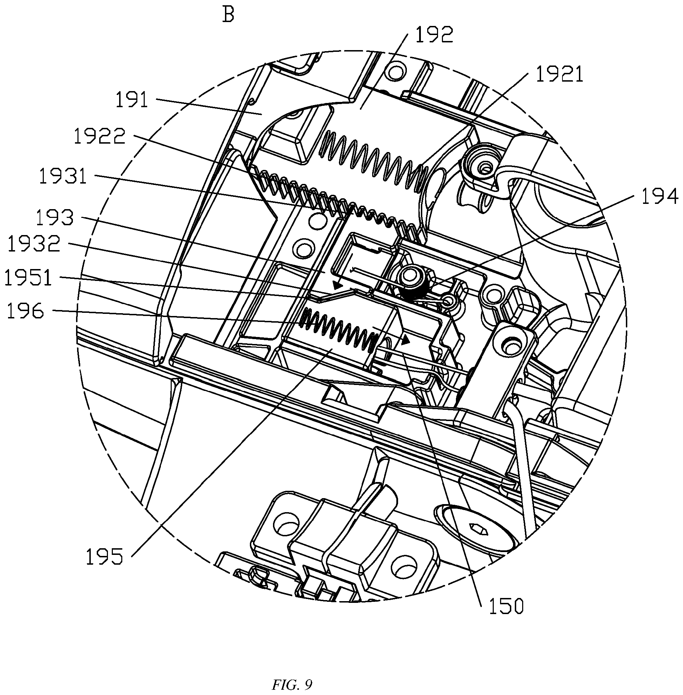

Referring to FIG. 8 and FIG. 9, a structure of a backrest adjustment mechanism in the electrically controlled chassis 100 according to an embodiment of the present disclosure is illustrated. In some embodiments, the chassis body may include a holder 111 and a backrest support 112 rotatably connected to the holder 111, and the backrest adjustment mechanism includes a catch block 191, a locking slider 192, and a first elastic member 1921. The catch block 191 is disposed on the backrest support 112. One end of the first elastic member 1921 is connected to the holder 111, and the other end of the first elastic member 1921 is connected to the locking slider 192, and configured to supply an elastic force for sliding towards the catch block 191 to the locking slider 192. The locking slider 192 is in limiting fit with the catch block 191, and configured to limit and adjust the backrest support 112.

By limiting fit between the locking slider 192 and the catch block 191, rotation of the backrest support 112 is limited and fixed.

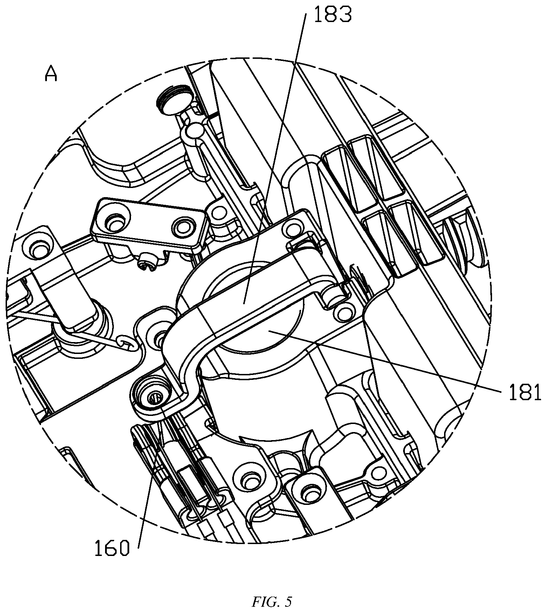

Still referring to FIG. 8 and FIG. 9, in some embodiments, the backrest adjustment mechanism may further include an elastic slider 193 and a second elastic member 194 (for example, a torsion spring as illustrated in FIG. 5). The elastic slider 193 is slidably disposed on the holder 111. One side of the locking slider 192 is provided with a first rack 1922. One end of the elastic slider 193 is provided with a second rack 1931. The elastic slider 193 locks and limits the locking slider 192 under meshing between the second rack 1931 on the elastic slider and the first rack 1922 on the locking slider 192. One end of the second elastic member 194 is disposed on the holder 111, and the other end of the second elastic member 194 is connected to the elastic slider 193, and configured to drive the elastic slider 193 to slide to detach from the locking slider 192.

By meshing between the second rack 1931 on the elastic slider 193 and the first rack 1922 on the locking slider 192, the locking slider 192 is slidably fixed, such that the locking slider 192 limits and fixes the catch block 191, and thus rotation of the backrest support 112 is limited.

Still referring to FIG. 8 and FIG. 9, in some embodiments, the backrest adjustment mechanism may further include an active slider 195 and a third elastic member 196. The active slider 195 is slidably disposed on the holder 111 and provided with a first inclined edge 1951, and the elastic slider 193 is provided with a second inclined edge 1932; one end of the active slider 195 is connected to one end of the third elastic member 196, and the other end of the active slider 195 is connected to the first pull cord 150. The other end of the third elastic member 196 is connected to the holder 111, and configured to supply an elastic force for sliding towards the elastic slider 193 to the active slider 195. In the case that the first pull cord 150 pulls the active slider 195 to slide (a slide direction is as indicated by the arrow marked on the active slider 195 in FIG. 9), the first inclined edge 1951 of the active slider 195 detaches from the second inclined edge 1932 of the elastic slider 193, and the elastic slider 193 slides towards the active slider 195 under action of the second elastic member 194, such that the second rack 1931 on the elastic slider 193 detaches from the first rack 1922 on the locking slider 192.

By configuring the active slider 195, the direction of the pull force applied by the first pull cord 150 is effectively optimized, such that the active slider 195 is conveniently pulled by the first pull cord 150, thereby facilitating easier unlocking of the locking slider 192.

Still referring to FIG. 1, in some embodiments, the chassis body 110 is provided with a manually controlled handle 113. The manually controlled handle 113 is connected to the backrest adjustment mechanism and the chassis lift mechanism by a third pull cord 210 and a fourth pull cord 220, and configured to control pitch of the backrest adjustment mechanism and lift of the chassis.

By configuring the manually controlled handle 113, the backrest adjustment mechanism and the chassis lift mechanism are electrically controlled, and may also be manually controlled separately, which is more convenient for the operation and control of the backrest adjustment mechanism and the chassis lift mechanism.

According to another aspect of the embodiments of the present disclosure, a chair is provided.

Referring to FIG. 9, a structure of a chair according to an embodiment of the present disclosure is schematically illustrated. As illustrated in FIG. 9, the chair 10 includes an electrically controlled chassis 100.

Still referring to FIG. 9, in some embodiments, the chair 10 may further include a handle 11 fixed to the electrically controlled chassis 100. The handle 11 is internally provided with a wireless signal transmitter device. A switch 12 electrically connected to the wireless signal transmitter device is disposed on an outer wall of the handle 11.

By configuring the switch 12 on the handle 11 for the chair 10 according to the embodiments of the present disclosure, the wireless signal transmitter device is controlled by the switch 12 to send the wireless control signal to the wireless signal receiver device in the electrically controlled chassis 100, such that convenient electrically controlled adjustment for pitch of the backrest and lift of the chassis in the chair 10 is achieved.

It should be noted that unless otherwise specified, the technical terms and scientific terms used in the present disclosure shall express general meanings that may be understood by a person skilled in the art.

In the description of the embodiments of the present disclosure, it should be understood that the terms "central," "transversal," "longitudinal," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like indicate orientations and position relationships which are based on the illustrations in the accompanying drawings, and these terms are merely for ease and brevity of the description, instead of indicating or implying that the devices or elements shall have a particular orientation and shall be structured and operated based on the particular orientation. Accordingly, these terms shall not be construed as limiting the present disclosure.

In addition, terms of "first," "second," and the like are only used for description, but shall not be understood as indication or implication of relative importance or implicit indication of the number of the specific technical features. In the description of the embodiments of the present disclosure, the term "more" or "a plurality of" signifies at least two, unless otherwise specified.

In the description of the embodiments of the present disclosure, it should be noted that unless otherwise specified and defined, the terms "mounted," "coupled," "connected," "fixed," and derivative forms thereof shall be understood in a broad sense, which, for example, may be understood as fixed connection, detachable connection or integral connection; may be understood as mechanical connection or electrical connection, or understood as direct connection, indirect connection via an intermediate medium, or communication between the interiors of two elements or interactions between two elements. Persons of ordinary skill in the art may understand the specific meanings of the above terms in the embodiments of the present disclosure according to the actual circumstances and contexts.

In the description of the embodiments of the present disclosure, unless otherwise specified or defined, by defining that a first feature is arranged "above," or "below," or "beneath" a second feature, it means that the first feature is in direct contact with the second feature, or the first feature is in indirect contact with the second feature via an intermediate medium. In addition, by defining that a first feature is arranged "over," "above," and "under" a second feature, it means that the first feature is rightly over the second feature or is obliquely above the second feature, or the horizontal height of the first feature is greater than that of the second feature. In addition, by defining that a first feature is arranged "under," or "below," or "beneath" a second feature, it means that the first feature is rightly under the second feature or is obliquely below the second feature, or the horizontal height of the first feature is less than that of the second feature.

It should be finally noted that the above-described embodiments are merely for illustration of the present disclosure, but are not intended to limit the present disclosure. Although the present disclosure is described in detail with reference to these embodiments, a person skilled in the art may also make various modifications to the technical solutions disclosed in the embodiments, or make equivalent replacements to a part of or all technical features contained therein. Such modifications or replacement, made without departing from the principles of the present disclosure, shall fall within the scope defined by the claims and the specification of the present disclosure. Especially, various technical features mentioned in various embodiments may be combined in any fashion as long as there is no structural conflict. The present disclosure is not limited to the specific embodiments described herein in this specification, but also includes all the technical solutions falling within the scope subject to the appended claims.

## Claims

1. An electrically controlled chassis, applicable to adjustment of a chair (10), the electrically controlled chassis comprising:
a chassis body (110);
an electrical control box (120), disposed on the chassis body (110), and internally provided with an accommodation space;
a drive motor (130), disposed in the accommodation space of the electrical control box (120), and configured to control lift adjustment of the chassis of the chair and pitch adjustment of a backrest of the chair;
a winding mechanism (140), connected to an output shaft (131) of the drive motor (130), and being rotatable with the output shaft (131) of the drive motor (130);
a first pull cord (150), reversely wound on the winding mechanism (140), and one end of the first pull cord (150) being fixedly connected to the winding mechanism (140);
a second pull cord (160), normally wound on the winding mechanism (140), and one end of the second pull cord (160) being fixedly connected to the winding mechanism (140);
a backrest adjustment mechanism, disposed on the chassis body (110), and fixedly connected to the other end of the first pull cord (150), wherein in the case that the output shaft (131) of the drive motor (130) drives the winding mechanism (140) to rotate along a first direction, the first pull cord (150) is pulled such that the backrest adjustment mechanism is adjustable; and
a chassis lift mechanism, disposed on the chassis body (110), and fixedly connected to the other end of the second pull cord (160), wherein in the case that the output shaft (131) of the drive motor (130) drives the winding mechanism (140) to rotate along a second direction, the second pull cord (160) is pulled such that the chassis lift mechanism is adjustable.

2. The electrically controlled chassis according to claim 1, further comprising a wireless signal receiver device (170), wherein the wireless signal receiver device (170) is disposed in the accommodation space of the electrical control box (120) and electrically connected to the drive motor (130), and configured to receive a wireless control signal to control operation of the drive motor (130),.

3. The electrically controlled chassis according to claim 1, wherein the winding mechanism (140) is provided with a rotation shaft (141), a baffle (142) being sleeved onto the rotation shaft (141), the baffle (142) being provided with an opening (1421);
wherein a throughbeam photoelectric sensor (143) corresponding to a position of the baffle (142) is disposed in the accommodation space of the electrical control box (120), the throughbeam photoelectric sensor (143) operates via the opening (1421), and configured to output a control signal to the drive motor (130).

4. The electrically controlled chassis according to claim 1, wherein
the chassis lift mechanism comprises a pneumatic rod (181) and a rotation stopper (183), one end of the pneumatic rod (181) being provided with a key valve (182), and one end of the rotation stopper (183) being rotatably connected to the chassis body (110), and the other end of the rotation stopper (183) being connected to the second pull cord (160);
wherein in the case that the drive motor (130) drives the second pull cord (160) to move, the second pull cord (160) pulls the rotation stopper (183) to rotate, such that rotation stopper (183) presses the key valve (182) to cause the pneumatic rod (181) to move upward and downward.

5. The electrically controlled chassis according to claim 4, wherein the chassis lift mechanism further comprises an urging direction adjuster (184); wherein
the urging direction adjuster (184) is disposed at a position, corresponding to the rotation stopper (183), on the chassis body (110), and the second pull cord (160) penetrates the urging direction adjuster (184); and
the urging direction adjuster (184) is configured to adjust a movement direction of the second pull cord (160) to be consistent with a tangential direction of a rotation direction of the rotation stopper (183).

6. The electrically controlled chassis according to claim 5, wherein the urging direction adjuster (184) is provided with a catch groove (1841) and a wheel (1842), the wheel (1842) being disposed opposite to the rotation stopper (183);
wherein the second pull cord (160) is clamped into the catch groove (1841), and wound on the wheel (1842).

7. The electrically controlled chassis according to claim 1, wherein the chassis body (110) comprises a holder (111) and a backrest support rotatably (112) connected to the holder (111), and the backrest adjustment mechanism comprises a catch block (191), a locking slider (192), and a first elastic member (1921); wherein
the catch block (191) is disposed on the backrest support (112);
one end of the first elastic member (1921) is connected to the holder (111), and the other end of the first elastic member (1921) is connected to the locking slider (192), and configured to supply an elastic force for sliding towards the catch block (191) to the locking slider (192); and
the locking slider (192) is in limiting fit with the catch block (191), and configured to limit and adjust the backrest support (112).

8. The electrically controlled chassis according to claim 7, wherein the backrest adjustment mechanism further comprises an elastic slider (193) and a second elastic member (194); wherein
the elastic slider (193) is slidably disposed on the holder (111);
one side of the locking slider (192) is provided with a first rack (1922), one end of the elastic slider (193) is provided with a second rack (1931), and the elastic slider (193) locks and limits the locking slider (192) under meshing between the second rack (1931) on the elastic slider (193) and the first rack (1922) on the locking slider (192); and
one end of the second elastic member (194) is disposed on the holder (111), and the other end of the second elastic member (194) is connected to the elastic slider (193), and configured to drive the elastic slider (193) to detach from the locking slider (192).

9. The electrically controlled chassis according to claim 8, wherein the backrest adjustment mechanism further comprises an active slider (195) and a third elastic member (196); wherein the active slider (195) is slidably disposed on the holder (111) and provided with a first slant edge (1951), and the elastic slider (193) is provided with a second slant edge (1931);
one end of the active slider (195) is connected to one end of the third elastic member (196), and the other end of the active slider (195) is connected to the first pull cord (150);
the other end of the third elastic member (196) is connected to the holder (111), and configured to supply an elastic force for sliding towards the elastic slider (193) to the active slider (195); and
in the case that the first pull cord (150) pulls the active slider (195) to slide, the first slant edge (1951) of the active slider (195) detaches from the second slant edge (1932) of the elastic slider (193), and the elastic slider (193) slides towards the active slider (195) under action of the second elastic member (194), such that the second rack (1931) on the elastic slider (193) detaches from the first rack (1922) on the locking slider (192).

10. The electrically controlled chassis according to claim 1, wherein
the chassis body (110) is provided with a manually controlled handle (113), wherein the manually controlled handle (113) is connected to the backrest adjustment mechanism and the chassis lift mechanism by a third pull cord (210) and a fourth pull cord (220), and configured to control the backrest adjustment mechanism and the chassis lift mechanism.

11. The electrically controlled chassis according to claim 1, wherein the output shaft (131) of the drive motor (130) is rotatably connected to the winding mechanism (140) via the transmission mechanism (200).

12. The electrically controlled chassis according to claim 11, wherein the transmission mechanism (200) comprises one or a plurality of a worm, a turbine, a gear, and a bevel gear, to retard or accelerate the drive motor (130), and change the direction of a transmission shaft.

13. The electrically controlled chassis according to claim 4, wherein the electrical control box (120) is provided with a battery accommodation structure (400) configured to accommodate a battery (300).

14. A chair, comprising the electrically controlled chassis (100) as defined in any one of claims 1 to 13.

15. The chair according to claim 14, further comprising a handle (11) fixed to the electrically controlled chassis (100), wherein the handle (11) is internally provided with a wireless signal transmitter device, a switch (12) electrically connected to the wireless signal transmitter device being disposed on an outer wall of the handle (11).

## Patentansprüche

1. Elektrisch gesteuertes Gestell, das zum Einstellen eines Stuhls (10) geeignet ist, wobei das elektrisch gesteuerte Gestell Folgendes umfasst:
Einen Gestellkörper (110);
einen elektrischen Schaltkasten (120), der am Gestellkörper (110) angeordnet und im Inneren mit einem Aufnahmeraum versehen ist;
einen Antriebsmotor (130), der im Aufnahmeraum des elektrischen Schaltkastens (120) angeordnet und dazu konfiguriert ist, die Hubeinstellung des Gestells des Stuhls und die Neigungseinstellung einer Rückenlehne des Stuhls zu steuern;
einen Aufwickelmechanismus (140), der mit einer Abtriebswelle (131) des Antriebsmotors (130) verbunden ist und mit der Abtriebswelle (131) des Antriebsmotors (130) drehbar ist;
ein erstes Zugseil (150), das umgekehrt auf den Aufwickelmechanismus (140) aufgewickelt ist, und wobei ein Ende des ersten Zugseils (150) fest mit dem Aufwickelmechanismus (140) verbunden ist;
ein zweites Zugseil (160), das normal auf den Aufwickelmechanismus (140) aufgewickelt wird, und wobei ein Ende des zweiten Zugseils (160) fest mit dem Aufwickelmechanismus (140) verbunden ist;
einen Rückenlehneneinstellmechanismus, der am Gestellkörper (110) angeordnet und fest mit dem anderen Ende des ersten Zugseils (150) verbunden ist, wobei in dem Fall, dass die Abtriebswelle (131) des Antriebsmotors (130) den Aufwickelmechanismus (140) zum Drehen entlang einer ersten Richtung antreibt, das erste Zugseil (150) derart gezogen wird, dass der Rückenlehneneinstellmechanismus einstellbar ist; und
einen Gestell-Hubmechanismus, der am Gestellkörper (110) angeordnet und fest mit dem anderen Ende des zweiten Zugseils (160) verbunden ist, wobei in dem Fall, dass die Abtriebswelle (131) des Antriebsmotors (130) den Aufwickelmechanismus (140) zum Drehen entlang einer zweiten Richtung antreibt, das zweite Zugseil (160) derart gezogen wird, dass der Gestell-Hubmechanismus einstellbar ist.

2. Elektrisch gesteuertes Gestell nach Anspruch 1, das ferner eine drahtlose Signalempfängervorrichtung (170) umfasst, wobei die drahtlose Signalempfängervorrichtung (170) im Aufnahmeraum des elektrischen Schaltkastens (120) angeordnet und elektrisch mit dem Antriebsmotor (130) verbunden und dazu konfiguriert ist, ein drahtloses Steuersignal zu empfangen, um den Betrieb des Antriebsmotors (130) zu steuern.

3. Elektrisch gesteuertes Gestell nach Anspruch 1, wobei der Aufwickelmechanismus (140) mit einer Drehwelle (141) und einer Ablenkplatte (142), die auf die Drehwelle (141) aufgesteckt ist, versehen ist, wobei die Ablenkplatte (142) mit einer Öffnung (1421) versehen ist;
wobei eine Einweg-Lichtschranke (143), die einer Position der Ablenkplatte (142) entspricht, im Aufnahmeraum des elektrischen Schaltkastens (120) angeordnet ist, die Einweg-Lichtschranke (143) über die Öffnung (1421) agiert und dazu konfiguriert ist, ein Steuersignal an den Antriebsmotor (130) auszugeben.

4. Elektrisch gesteuertes Gestell nach Anspruch 1, wobei der Gestell-Hubmechanismus eine pneumatische Stange (181) und einen Drehanschlag (183) umfasst, wobei ein Ende der pneumatischen Stange (181) mit einem Schlüsselventil (182) versehen ist und ein Ende des Drehanschlags (183) drehbar mit dem Gestellkörper (110) verbunden ist und das andere Ende des Drehanschlags (183) mit dem zweiten Zugseil (160) verbunden ist;
wobei in dem Fall, dass der Antriebsmotor (130) das zweite Zugseil (160) zum Bewegen antreibt, das zweite Zugseil (160) den Drehanschlag (183) derart zum Drehen zieht, dass der Drehanschlag (183) das Schlüsselventil (182) drückt, um die pneumatische Stange (181) dazu zu veranlassen, sich nach oben und unten zu bewegen.

5. Elektrisch gesteuertes Gestell nach Anspruch 4, wobei der Gestell-Hubmechanismus ferner einen drängenden Richtungseinsteller (184) umfasst; wobei
der drängende Richtungseinsteller (184) an einer Position, die dem Drehanschlag (183) entspricht, am Gestellkörper (110) angeordnet ist und das zweite Zugseil (160) den drängenden Richtungseinsteller (184) durchdringt; und
der drängende Richtungseinsteller (184) dazu konfiguriert ist, eine Bewegungsrichtung des zweiten Zugseils (160) so einzustellen, dass sie mit einer tangentialen Richtung einer Drehrichtung des Drehanschlags (183) übereinstimmt.

6. Elektrisch gesteuertes Gestell nach Anspruch 5, wobei der drängende Richtungseinsteller (184) mit einer Fangnut (1841) und einem Rad (1842) versehen ist, wobei das Rad (1842) gegenüber dem Drehanschlag (183) angeordnet ist; wobei das zweite Zugseil (160) in die Fangnut (1841) eingeklemmt und auf das Rad (1842) aufgewickelt wird.

7. Elektrisch gesteuertes Gestell nach Anspruch 1, wobei der Gestellkörper (110) einen Halter (111) und einen Rückenlehnenträger (112), der drehbar mit dem Halter (111) verbunden ist, umfasst und der Rückenlehneneinstellmechanismus einen Fangblock (191), einen Verriegelungsschieber (192) und ein erstes elastisches Element (1921) umfasst; wobei
der Fangblock (191) am Rückenlehnenträger (112) angeordnet ist;
ein Ende des ersten elastischen Elements (1921) mit dem Halter (111) verbunden ist und das andere Ende des ersten elastischen Elements (1921) mit dem Verriegelungsschieber (192) verbunden und dazu konfiguriert ist, eine elastische Kraft zum Gleiten in Richtung des Fangblocks (191) zum Verriegelungsschieber (192) zu liefern; und
der Verriegelungsschieber (192) sich in Begrenzungspassung mit dem Fangblock (191) befindet und dazu konfiguriert ist, den Rückenlehnenträger (112) zu begrenzen und einzustellen.

8. Elektrisch gesteuertes Gestell nach Anspruch 7, wobei der Rückenlehneneinstellmechanismus ferner einen elastischen Schieber (193) und ein zweites elastisches Element (194) umfasst; wobei
der elastische Schieber (193) verschiebbar am Halter (111) angeordnet ist;
eine Seite des Verriegelungsschiebers (192) mit einer ersten Zahnstange (1922) versehen ist, ein Ende des elastischen Schiebers (193) mit einer zweiten Zahnstange (1931) versehen ist und der elastische Schieber (193) den Verriegelungsschieber (192) unter Verzahnung zwischen der zweiten Zahnstange (1931) am elastischen Schieber (193) und der ersten Zahnstange (1922) am Verriegelungsschieber (192) verriegelt und begrenzt; und
ein Ende des zweiten elastischen Elements (194) am Halter (111) angeordnet ist und das andere Ende des zweiten elastischen Elements (194) mit dem elastischen Schieber (193) verbunden und dazu konfiguriert ist, den elastischen Schieber (193) anzutreiben, um sich vom Verriegelungsschieber (192) zu lösen.

9. Elektrisch gesteuertes Gestell nach Anspruch 8, wobei der Rückenlehneneinstellmechanismus ferner einen aktiven Schieber (195) und ein drittes elastisches Element (196) umfasst; wobei
der aktive Schieber (195) verschiebbar am Halter (111) angeordnet und mit einer ersten schrägen Kante (1951) versehen ist, und der elastische Schieber (193) mit einer zweiten schrägen Kante (1931) versehen ist;
ein Ende des aktiven Schiebers (195) mit einem Ende des dritten elastischen Elements (196) verbunden ist und das andere Ende des aktiven Schiebers (195) mit dem ersten Zugseil (150) verbunden ist;
das andere Ende des dritten elastischen Elements (196) mit dem Halter (111) verbunden und dazu konfiguriert ist, eine elastische Kraft zum Gleiten in Richtung des elastischen Schiebers (193) an den aktiven Schieber (195) zu liefern; und
in dem Fall, dass das erste Zugseil (150) den aktiven Schieber (195) zum Gleiten zieht, die erste schräge Kante (1951) des aktiven Schiebers (195) sich von der zweiten schrägen Kante (1932) des elastischen Schiebers (193) löst und der elastische Schieber (193) unter der Wirkung des zweiten elastischen Elements (194) derart in Richtung des aktiven Schiebers (195) gleitet, dass sich die zweite Zahnstange (1931) am elastischen Schieber (193) von der ersten Zahnstange (1922) am Verriegelungsschieber (192) löst.

10. Elektrisch gesteuertes Gestell nach Anspruch 1, wobei der Gestellkörper (110) mit einem manuell bedienbaren Griff (113) versehen ist, wobei der manuell bedienbare Griff (113) über ein drittes Zugseil (210) und ein viertes Zugseil (220) mit dem Rückenlehneneinstellmechanismus und dem Gestell-Hubmechanismus verbunden und dazu konfiguriert ist, den Rückenlehneneinstellmechanismus und den Gestell-Hubmechanismus zu steuern.

11. Elektrisch gesteuertes Gestell nach Anspruch 1, wobei die Abtriebswelle (131) des Antriebsmotors (130) über den Übertragungsmechanismus (200) drehbar mit dem Aufwickelmechanismus (140) verbunden ist.

12. Elektrisch gesteuertes Gestell nach Anspruch 11, wobei der Übertragungsmechanismus (200) eine oder mehrere einer Schnecke, einer Turbine, eines Zahnrads und eines Kegelrads umfasst, um den Antriebsmotor (130) zu verlangsamen oder zu beschleunigen und die Richtung einer Getriebewelle zu ändern.

13. Elektrisch gesteuertes Gestell nach Anspruch 4, wobei der elektrische Schaltkasten (120) mit einer Batterieaufnahmestruktur (400) versehen ist, die dazu konfiguriert ist, eine Batterie (300) aufzunehmen.

14. Stuhl, der das elektrisch gesteuerte Gestell (100) nach einem der Ansprüche 1 bis 13 umfasst.

15. Stuhl nach Anspruch 14, der ferner einen Griff (11) umfasst, der an dem elektrisch gesteuerten Gestell (100) befestigt ist, wobei der Griff (11) intern mit einer drahtlosen Signalübertragungsvorrichtung versehen ist, wobei ein Schalter (12), der elektrisch mit der drahtlosen Signalübertragungsvorrichtung verbunden ist, an einer Außenwand des Griffs (11) angeordnet ist.

## Revendications

1. Châssis à commande électrique, applicable au réglage d'une chaise (10), le châssis à commande électrique comprenant :
un corps de châssis (110) ;
un boîtier de commande électrique (120), disposé sur le corps de châssis (110), et doté à l'intérieur d'un espace d'installation ;
un moteur d'entraînement (130), disposé dans l'espace d'installation du boîtier de commande électrique (120), et configuré pour commander un réglage de levage du châssis de la chaise et un réglage de pas d'un dossier de la chaise ;
un mécanisme d'enroulement (140), relié à un arbre de sortie (131) du moteur d'entraînement (130), et qui est rotatif avec l'arbre de sortie (131) du moteur d'entraînement (130) ;
une première corde de traction (150), enroulée à l'envers sur le mécanisme d'enroulement (140), et une extrémité de la première corde de traction (150) étant reliée de manière fixe au mécanisme d'enroulement (140) ;
une deuxième corde de traction (160), enroulée normalement sur le mécanisme d'enroulement (140), et une extrémité de la deuxième corde de traction (160) étant reliée de manière fixe au mécanisme d'enroulement (140) ; un mécanisme de réglage de dossier, disposé sur le corps de châssis (110), et relié de manière fixe à l'autre extrémité de la première corde de traction (150), dans lequel dans le cas où l'arbre de sortie (131) du moteur d'entraînement (130) entraîne le mécanisme d'enroulement (140) pour qu'il tourne le long d'une première direction, la première corde de traction (150) est tirée de sorte que le mécanisme de réglage de dossier soit réglable ; et un mécanisme de levage de châssis, disposé sur le corps de châssis (110), et relié de manière fixe à l'autre extrémité de la deuxième corde de traction (160), dans lequel dans le cas où l'arbre de sortie (131) du moteur d'entraînement (130) entraîne le mécanisme d'enroulement (140) pour qu'il tourne le long d'une deuxième direction, la deuxième corde de traction (160) est tirée de sorte que le mécanisme de levage de châssis soit réglable.

2. Châssis à commande électrique selon la revendication 1, comprenant en outre un dispositif de récepteur de signal sans fil (170), dans lequel le dispositif de récepteur de signal sans fil (170) est disposé dans l'espace d'installation du boîtier de commande électrique (120) et connecté électriquement au moteur d'entraînement (130), et configuré pour recevoir un signal de commande sans fil pour commander le fonctionnement du moteur d'entraînement (130) .

3. Châssis à commande électrique selon la revendication 1, dans lequel le mécanisme d'enroulement (140) est doté d'un arbre tournant (141), un déflecteur (142) étant glissé sur l'arbre tournant (141), le déflecteur (142) étant doté d'une ouverture (1421) ;
dans lequel un capteur photoélectrique à faisceau traversant (143) correspondant à une position du déflecteur (142) est disposé dans l'espace d'installation du boîtier de commande électrique (120), le capteur photoélectrique à faisceau traversant (143) fonctionne via l'ouverture (1421), et configuré pour émettre un signal de commande vers le moteur d'entraînement (130).

4. Châssis à commande électrique selon la revendication 1, dans lequel
le mécanisme de levage de châssis comprend une tige pneumatique (181) et une butée de rotation (183), une extrémité de la tige pneumatique (181) étant dotée d'une valve de déclenchement (182), et une extrémité de la butée de rotation (183) étant reliée de manière rotative au corps de châssis (110), et l'autre extrémité de la butée de rotation (183) étant reliée à la deuxième corde de traction (160) ;
dans lequel dans le cas où le moteur d'entraînement (130) entraîne la deuxième corde de traction (160) pour qu'elle bouge, la deuxième corde de traction (160) tire la butée de rotation (183) pour qu'elle tourne, de sorte que la butée de rotation (183) appuie sur la valve de déclenchement (182) pour amener la tige pneumatique (181) à bouger vers le haut et vers le bas.

5. Châssis à commande électrique selon la revendication 4, dans lequel le mécanisme de levage de châssis comprend en outre un dispositif de réglage de direction de poussée (184) ; dans lequel
le dispositif de réglage de direction de poussée (184) est disposé à une position, correspondant à la butée de rotation (183), sur le corps de châssis (110), et la deuxième corde de traction (160) pénètre dans le dispositif de réglage de direction de poussée (184) ; et
le dispositif de réglage de direction de poussée (184) est configuré pour régler une direction de mouvement de la deuxième corde de traction (160) pour qu'elle soit cohérente avec une direction tangentielle d'une direction de rotation de la butée de rotation (183).

6. Châssis à commande électrique selon la revendication 5, dans lequel le dispositif de réglage de direction de poussée (184) est doté d'une rainure de retenue (1841) et d'une roue (1842), la roue (1842) étant disposée à l'opposé de la butée de rotation (183) ;
dans lequel la deuxième corde de traction (160) est bloquée dans la rainure de retenue (1841), et enroulée sur la roue (1842).

7. Châssis à commande électrique selon la revendication 1, dans lequel le corps de châssis (110) comprend un organe de maintien (111) et un support de dossier relié de manière rotative (112) à l'organe de maintien (111), et le mécanisme de réglage de dossier comprend un bloc de retenue (191), un organe coulissant de verrouillage (192) et un premier élément élastique (1921) ; dans lequel le bloc de retenue (191) est disposé sur le support de dossier (112) ;
une extrémité du premier élément élastique (1921) est reliée à l'organe de maintien (111), et l'autre extrémité du premier élément élastique (1921) est reliée à l'organe coulissant de verrouillage (192), et configurée pour fournir une force élastique pour coulisser vers le bloc de retenue (191) à l'organe coulissant de verrouillage (192) ; et
l'organe coulissant de verrouillage (192) est dans un ajustement avec limitation avec le bloc de retenue (191), et configuré pour limiter et régler le support de dossier (112) .

8. Châssis à commande électrique selon la revendication 7, dans lequel le mécanisme de réglage de dossier comprend en outre un organe coulissant élastique (193) et un deuxième élément élastique (194) ; dans lequel
l'organe coulissant élastique (193) est disposé de manière coulissante sur l'organe de maintien (111) ;
un côté de l'organe coulissant de verrouillage (192) est doté d'un premier bâti (1922), une extrémité de l'organe coulissant élastique (193) est dotée d'un deuxième bâti (1931), et l'organe coulissant élastique (193) verrouille et limite l'organe coulissant de verrouillage (192) suite à un emboîtement entre le deuxième bâti (1931) sur l'organe coulissant élastique (193) et le premier bâti (1922) sur l'organe coulissant de verrouillage (192) ; et une extrémité du deuxième élément élastique (194) est disposée sur l'organe de maintien (111), et l'autre extrémité du deuxième élément élastique (194) est reliée à l'organe coulissant élastique (193), et configurée pour entraîner l'organe coulissant élastique (193) pour qu'il se détache de l'organe coulissant de verrouillage (192).

9. Châssis à commande électrique selon la revendication 8, dans lequel le mécanisme de réglage de dossier comprend en outre un organe coulissant actif (195) et un troisième élément élastique (196) ; dans lequel l'organe coulissant actif (195) est disposé de manière coulissante sur l'organe de maintien (111) et doté d'un premier bord oblique (1951), et l'organe coulissant élastique (193) est doté d'un deuxième bord oblique (1931) ;
une extrémité de l'organe coulissant actif (195) est reliée à une extrémité du troisième élément élastique (196), et l'autre extrémité de l'organe coulissant actif (195) est reliée à la première corde de traction (150) ; l'autre extrémité du troisième élément élastique (196) est reliée à l'organe de maintien (111), et configurée pour fournir une force élastique pour coulisser vers l'organe coulissant élastique (193) à l'organe coulissant actif (195) ; et
dans le cas où la première corde de traction (150) tire l'organe coulissant actif (195) pour qu'il coulisse, le premier bord oblique (1951) de l'organe coulissant actif (195) se détache du deuxième bord oblique (1932) de l'organe coulissant élastique (193), et l'organe coulissant élastique (193) coulisse vers l'organe coulissant actif (195) sous l'action du deuxième élément élastique (194), de sorte que le deuxième bâti (1931) sur l'organe coulissant élastique (193) se détache du premier bâti (1922) sur l'organe coulissant de verrouillage (192).

10. Châssis à commande électrique selon la revendication 1, dans lequel
le corps de châssis (110) est doté d'une poignée à commande manuelle (113), dans lequel la poignée à commande manuelle (113) est reliée au mécanisme de réglage de dossier et au mécanisme de levage de châssis par une troisième corde de traction (210) et une quatrième corde de traction (220), et configurée pour commander le mécanisme de réglage de dossier et le mécanisme de levage de châssis.

11. Châssis à commande électrique selon la revendication 1, dans lequel l'arbre de sortie (131) du moteur d'entraînement (130) est relié de manière rotative au mécanisme d'enroulement (140) via le mécanisme de transmission (200).

12. Châssis à commande électrique selon la revendication 11, dans lequel le mécanisme de transmission (200) comprend un ou une pluralité parmi une vis sans fin, une turbine, un engrenage et un engrenage conique, pour retarder ou accélérer le moteur d'entraînement (130), et changer la direction d'un arbre de transmission.

13. Châssis à commande électrique selon la revendication 4, dans lequel le boîtier de commande électrique (120) est doté d'une structure d'installation de batterie (400) configurée pour contenir une batterie (300).

14. Chaise, comprenant le châssis à commande électrique (100) selon l'une quelconque des revendications 1 à 13.

15. Chaise selon la revendication 14, comprenant en outre une poignée (11) fixée au châssis à commande électrique (100), dans laquelle la poignée (11) est dotée à l'intérieur d'un dispositif d'émetteur de signal sans fil, un commutateur (12) connecté électriquement au dispositif d'émetteur de signal sans fil étant disposé sur une paroi extérieure de la poignée (11).
